(19) Europäisches Patentamt

European Patent Office

Office européen des brevets

(11) Veröffentlichungsnummer : **0 023 611**
**B1**

(12) **EUROPÄISCHE PATENTSCHRIFT**

(45) Veröffentlichungstag der Patentschrift :
11.05.83

(21) Anmeldenummer : 80104028.8

(22) Anmeldetag : 11.07.80

(51) Int. Cl.³ : **B 01 D 53/04//** B01D53/34

(54) **Verfahren zur Reinigung von Prozessgas der Abfallpyrolyse.**

(30) Priorität : 12.07.79 DE 2928222

(43) Veröffentlichungstag der Anmeldung :
11.02.81 Patentblatt 81/06

(45) Bekanntmachung des Hinweises auf die Patenterteilung : 11.05.83 Patentblatt 83/19

(84) Benannte Vertragsstaaten :
AT BE CH DE FR GB IT LI LU NL SE

(56) Entgegenhaltungen :
AT B 112 996
DE A 2 108 756
DE A 2 641 045
DE B 1 204 211
DE C 589 713
DE C 966 326
US A 3 455 089
US A 4 089 809

(73) Patentinhaber : HERKO   Pyrolyse  GmbH & Co.
Recycling KG
In der Ketschau
D-6832 Hockenheim (DE)

(72) Erfinder : Thomanetz, Erwin, Dipl-Chem
Wagenburgstrasse 28
D-7000 Stuttgart 1 (DE)

(74) Vertreter : Wilhelms, Rolf E., Dr. et al
WILHELMS & KILIAN Patentanwälte Geibelstrasse 6
D-8000 München 80 (DE)

Jouve, 18, rue St-Denis, 75001 Paris, France

## Verfahren zur Reinigung von Prozessgas der Abfallpyrolyse

Die Erfindung betrifft ein Verfahren zur Behandlung von schwefelwasserstoff- und/oder cyanwasserstoffhaltigem Prozeßgas der Abfallpyrolyse, wobei das Prozeßgas zur Reinigung von dem Schwefelwasserstoff und/oder Cyanwasserstoff über Eisenhydroxidpellets geleitet und die mit dem Schwefelwasserstoff und/oder Cyanwasserstoff chemisch umgesetzten Pellets im Wechsel mit der Gasreinigung mittels Luft regeneriert werden.

Das bei der thermischen Zersetzung von Abfallstoffen unter Luftabschluß entstehende Schwelgas ist zum Teil, etwa zu Ölen, kondensierbar und enthält daneben als Prozeßgas anfallende Permanentgase. Ein hoher Anteil der Permanentgase ist brennbar, so daß mit ihnen Brenner, über die der Pyrolysereaktor geheizt wird, oder auch ein Gasmotor, etwa zur Gewinnung elektrischer Energie, betrieben werden können. Insbesondere bei der Pyrolyse von Altreifen bzw. ganz allgemein von schwefelhaltigen Abfallstoffen fällt in erheblichem Maße schwefelhaltiges Gas vorwiegend in Form von Schwefelwasserstoff an, das äußerst störend ist, da es zu dem aggressiven und umweltbelastenden Schwefeldioxid verbrennt. Ebenso unangenehm ist der bei der Pyrolyse stickstoffhaltiger Komponenten, die in Altreifen ebenfalls vorhanden sind, entstehende Cyanwasserstoff. Vor einer Weiterbehandlung der Permanentgase durch Verbrennen in einem Gasbrenner oder Gasmotor muß daher für die Beseitigung der Schwefel- und Cyananteile Sorge getragen werden.

Es ist bekannt, zur Entfernung von Schwefelwasserstoff und/oder Cyanwasserstoff aus Gasen, diese Gase über Eisenhydroxidpellets zu leiten und die dabei chemisch zu Eisensulfid umgesetzten Pellets durch Überleiten von Luft unter gleichzeitiger Bildung von elementarem Schwefel zu regenerieren. Nur wenn die Regenerationsphase bei erhöhten Temperaturen durchgeführt wird, bildet sich dabei statt des elementaren Schwefels umweltbelastendes Schwefeldioxidgas, das wieder zu elementarem Schwefel reduziert werden muß (US-A-4 089 09). Solche hohen Temperaturen kommen bei der Reinigung von Prozeßgas der Abfallpyrolyse jedoch nicht vor, da es sich bei dem Prozeßgas um das bei der Kondensation der kondensierbaren Anteile des Schwelgases verbleibende Gas handelt, das somit kühl ist.

Üblicherweise wird die Regenerierabluft ohne weiteres in die Atmosphäre abgegeben. Dies führt zu einer Umweltbelastung, wenn, wie bei der Reinigung von Prozeßgas der Abfallpyrolyse, die Regenerierabluft mit bei der Regenerierung von den Eisenhydroxidpellets desorbierten geruchsintensiven Stoffen aus der Gasreinigung befrachtet ist.

Der Erfindung liegt daher die Aufgabe zugrunde, daß Prozeßgas unter Ausnutzung seiner Energie kontinuierlich so zu behandeln, daß dabei eine möglichst geringe Umweltbelastung auftritt.

Diese Aufgabe wird mit einem Verfahren der eingangs genannten Art dadurch gelöst, daß unter Verwendung zweier Reinigermassen mit Eisenhydroxidpellets durch die eine das Prozeßgas geleitet und nachfolgend verbrannt und durch die andere die Verbrennungsluft für die Verbrennung des Prozeßgases angesaugt wird, wobei die Verteilung von Prozeßgas und Verbrennungsluft auf die beiden Reinigermassen von Zeit zu Zeit umgekehrt wird. Mit dieser Verfahrensweise, bei der die Verbrennungsluft die Regenerierabluft ist, werden die von den Pellets desorbierten geruchsintensiven Stoffe bei der Verbrennung des Prozeßgases ebenfalls thermisch umgesetzt bzw. verbrannt und damit beseitigt.

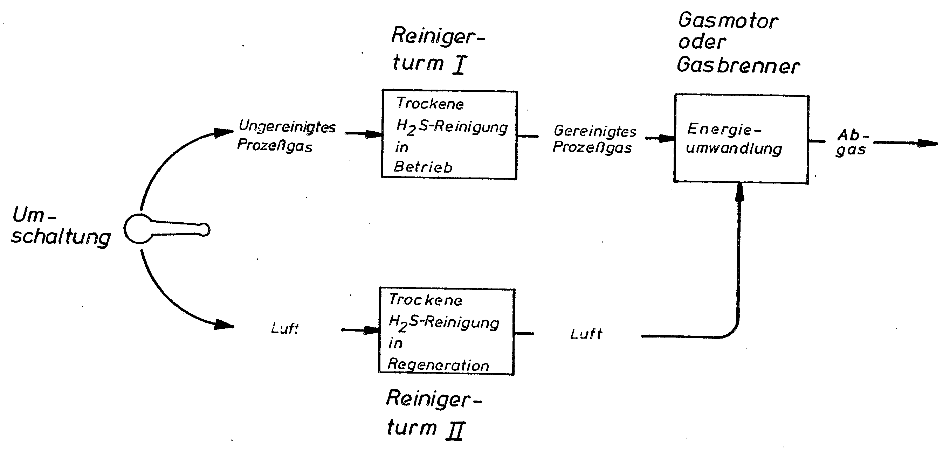

Eine Ausführungsform des erfindungsgemäßen Verfahrens wird im folgenden in Verbindung mit der einzigen Figur der beigefügten Zeichnung beschrieben.

In zwei Reinigertürmen I und II befinden sich jeweils handelsübliche Pellets aus Eisenhydroxid. Das ungereinigte Prozeßgas, also das Permanentgas, das verbleibt, wenn aus dem bei der Abfallpyrolyse entstandenen Schwelgase, die beispielsweise zu Ölen, kondensierbaren Anteile entfernt worden sind, wird umschaltbar entweder durch den Reinigerturm I oder durch den Reinigerturm II geleitet. Bei der Pyrolyse von schwefelhaltigen Abfallstoffen, insbesondere also Altreifen oder anderen Gummiabfällen, enthält das ungereinigte Prozeßgas Schwefelwasserstoff. Im Reinigerturm, durch den das Prozeßgas gerade geleitet wird, setzt sich dieser und bei der Pyrolyse stickstoffhaltiger Komponenten, die in Altreifen ebenfalls vorhanden sind, außerdem anfallender Cyanwasserstoff in bekannter Weise mit den Eisenhydroxidpellets um, so daß auf diese Weise das Prozeßgas von Schwefel- und Cyanwasserstoff befreit wird. Das gereinigte Prozeßgas wird als Brenngas einem Gasmotor, der etwa als Generator zur Gewinnung elektrischer Energie arbeitet, oder einem Gasbrenner, mit welchem der Pyrolysereaktor beheizt wird, zugeführt.

Die Reinigermassen in den Reinigertürmen I und II müssen zeitweilig mit Luft regeneriert werden. Während beispielsweise durch den Reinigerturm I das ungereinigte Prozeßgas geleitet wird, wird durch den Reinigerturm II Luft zur Regenerierung der in diesem vorhandenen Reinigermassen geleitet, und umgekehrt. Die bei der Reinigung entstehende Abluft ist durch Desorption geruchsintensiver Prozeßgasbestandteile von den Pellets stark verunreinigt. Deshalb wird das Verfahren so geführt, daß der Gasmotor oder Gasbrenner als Verbrennungsluft diese Abluft ansaugt, wobei während des Verbrennungsprozesses die geruchsbildenden Stoffe ebenfalls verbrannt werden. Auf diese Weise erhält man eine Desodorierung der Regenerierluft, ohne daß hierfür zusätzliche Einrichtungen notwendig wären. Das Abgas des Gasbrenners oder Gasmotors enthält im Idealfall nur mehr Kohlendioxid und Wasser, deren Abgabe an die Atmosphäre die geringstmögliche Umweltbelastung darstellen.

Nach erfolgter Regenerierung der Reinigermasse in dem einen der Reinigertürme werden Regenerierluft und ungereinigtes Prozeßgas auf den jeweils anderen Reinigerturm umgeschaltet, und das Verfahren setzt sich unter Vertauschung der Betriebszustände zwischen den Reinigertürmen I und II fort.

## Anspruch

Verfahren zur Behandlung von schwefelwasserstoff und/oder cyanwasserstoffhaltigem Prozeßgas der Abfallpyrolyse, wobei das Prozeßgas zur Reinigung von dem Schwefelwasserstoff und/oder Cyanwasserstoff über Eisenhydroxidpellets geleitet und die mit dem Schwefelwasserstoff und/oder Cyanwasserstoff chemisch umgesetzten Pellets im Wechsel mit der Gasreinigung mittels Luft regeneriert werden, dadurch gekennzeichnet, daß unter Verwendung zweier Reinigermassen mit Einsenhydroxidpellets durch die eine das Prozeßgas geleitet und nachfolgend verbrannt und durch die andere die Verbrennungsluft für die Verbrennung des Prozeßgases angesaugt wird, wobei die Verteilung von Prozeßgas und Verbrennungsluft auf die beiden Reinigermassen von Zeit zu Zeit umgekehrt wird.

## Claim

Process for treating hydrogen sulphide and/or hydrogen cyanide-containing waste pyrolysis process gas, which is passed over iron hydroxide pellets to purify it by removing the hydrogen sulphide and/or hydrogen cyanide and the pellets chemically reacted with the hydrogen sulphide and/or hydrogen cyanide are regenerated by means of air, alternating with the gas purification, characterised in that two purifying masses with iron hydroxide pellets are used, through one of which is passed the process gas which is subsequently burnt and through the other is sucked the combustion air for the combustion of the process gas, the distribution of the process gas and combustion air over the two purifying masses being reversed from time to time.

## Revendication

Procédé pour traiter un gaz de processus contenant de l'acide sulfhydrique et/ou de l'acide cyanhydrique et produit par la pyrolyse de déchets, selon lequel le gaz de processus est conduit au-dessus de boulettes d'hydrate ferrique pour réaliser l'élimination de l'acide sulfhydrique et/ou de l'acide cyanhydrique et les boulettes transformées chimiquement par l'acide sulfhydrique et/ou l'acide cyanhydrique sont régénérées à l'aide d'air en alternance avec l'épuration du gaz, caractérisé en ce que moyennant l'utilisation de deux masses de produits épurateurs avec des boulettes d'hydrate ferrique, le gaz de processus est conduit à travers l'une des masses et est ensuite brûlé et l'air de combustion servant à la combustion du gaz de processus est aspiré à travers l'autre masse, la répartition du gaz de processus et de l'air de combustion entre les deux masses de produits épurateurs étant inversée de temps en temps.